# EUROPÄISCHE PATENTSCHRIFT

(11) **EP 2 536 545 B1**
(45) Veröffentlichungstag und Bekanntmachung des Hinweises auf die Patenterteilung: **16.04.2014**
(21) Anmeldenummer: 11704180.6
(22) Anmeldetag: 03.02.2011
(51) Int. Cl.: B29B 17/00, B29K 105/06, B29K 307/04, C08J 3/12, C08K 7/06, B29B 9/04, B29B 9/14

(54) **VERFAHREN ZUR HERSTELLUNG VON PELLETS AUS FASERVERBUNDWERKSTOFFEN**
METHOD FOR PRODUCING PELLETS FROM FIBER COMPOSITE MATERIALS
PROCÉDÉ DE FABRICATION DE GRANULÉS EN MATÉRIAUX COMPOSITES RENFORCÉS PAR DES FIBRES

(30) Priorität: 17.02.2010 DE 102010008349
(43) Veröffentlichungstag der Anmeldung: 26.12.2012
(73) Patentinhaber: SGL Automotive Carbon Fibers GmbH & Co. KG, 80939 München (DE)
(72) Erfinder: ORTLEPP, Gerald, 07407 Uhlstädt-Kirchhasel (DE); LÜTZKENDORF, Renate, 07426 Königsee (DE); REUSSMANN, Thomas, 07407 Rudolstadt (DE)
(74) Vertreter: Poxleitner, Simon
(86) Internationale Anmeldenummer: PCT/EP2011/000485
(87) Internationale Veröffentlichungsnummer: WO 2011/101093

(56) Entgegenhaltungen:
- DE-A1- 10 151 761
- DE-A1- 19 739 486
- DE-C1- 10 038 405

## Beschreibung

Die vorliegende Erfindung betrifft ein Verfahren zur Herstellung von Pellets aus Faserverbundwerkstoffen geeignet für die weitere Verarbeitung in einem kunststofftechnischen Fertigungsverfahren, wobei die Pellets Carbonfasem und wenigstens ein thermoplastisches Matrixmaterial enthalten.

Carbonfasem werden als Faserverstärkung von thermoplastisch oder duromer gebundenen Faserverbundwerkstoffen (FVW) eingesetzt. Zur Erreichung maximaler Verstärkungseffekte geschieht dies bislang überwiegend in Form endloser Carbonfaserstoffe wie zum Beispiel Filamentgame, Multifilamentgame oder so genannter Rowings. Carbonfasern werden hingegen als Schnittfasem mit endlichen Faserlängen beispielsweise im Bereich von 20 mm bis 80 mm, wie sie aus dem Bereich der klassischen Textilverarbeitung bekannt sind, hingegen nicht am Markt angeboten, auch weil sie problematischer zu verarbeiten sind.

Carbonfaserstoffe werden seit einigen Jahren in zunehmenden Umfang als hochleistungsfähige Faserstoffbewehrung eingesetzt. Die Hauptanwendungen liegen beispielsweise im Flugzeugbau, Schiffbau, Fahrzeugbau und in Windkraftanlagen. Durch die immer breitere Massenanwendung nimmt die Menge an carbonfaserhaltigen Produktionsabfällen zu ebenso wie der Anfall ausgedienter Altteile. Carbonfasem sind aufgrund ihres komplizierten Herstellungsprozesses sehr teuer. Die Preise bewegen sich zwischen etwa 15 €/kg bis zu etwa 300 €/kg für Spezialtypen. Aus wirtschaftlichen und umweltpolitischen Gründer ist es daher wünschenswert, Möglichkeiten zur Aufbereitung der Abfälle und Altteile zu schaffen und die darin enthaltenen Carbonfaseranteile neuen Anwendungen zuzuführen, in denen sie zumindest teilweise teure Primärkabonfasern ersetzen können.

Obwohl es in der Industrie bereits Versuche gegeben hat, carbonfaserhaltige Produktionsabfälle wiederzuverwerten, indem Abfälle geschnitten und/oder gemahlen werden und beispielsweise zur Bewehrung in Kunststoffen oder Baustoffen eingesetzt werden, wird bislang überhaupt nur ein kleiner Teil dieser Abfälle gesammelt und vermarktet. Für große Mengen carbonfaserhaltiger Abfälle gibt es bislang keine hochwertige Wiederverwertung, so dass sie als Müll entsorgt werden müssen.

Werden Faserverbundwerkstoffe in der Extrusions- oder Spritzgusstechnik eingesetzt, müssen die Ausgangsmaterialien in einem immer konstanten Masseverhältnis von Fasern und thermoplastischem Polymer dosiert werden. Eine gute Dosierung und Durchmischung lässt sich nur dann erzielen, wenn die beiden Mischungspartner bezüglich ihrer geometrischen Abmessung, Partikeloberfläche und ihrer Schüttvolumina gleich oder zumindest sehr ähnlich sind. Kurze Fasern und gemahlene Stäube verfügen jedoch über sehr große Unterschiede bezüglich dieser Parameter im Vergleich zu den verwendeten Kunststoffgranulatkörnern, die in der Regel mit einem Durchmesser von etwa 3 mm bis 5 mm eine glatte Oberfläche und damit eine gute Rieselfähigkeit haben. Bei Kurzfaserschüttungen verhaken die einzelnen Fasern untereinander in einer Wirrlage, bilden Faserbrücken und Materialklumpen, die die Öffnung der Einfülltrichter an Extrudern und Spritzgießmaschinen verstopfen und nur einen unkontrollierbar sporadischen Einzug in die Maschine zulassen. Neben den sich daraus ergebenden Unterbrechungen eines kontinuierlichen Materialstroms für die Maschinenbeschickung kann es zu erheblichen Abweichungen des angestrebten Mischungsverhältnisses von Verstärkungsfaser und Kunststoffmatrix im Endprodukt kommen, was dazu führt, dass mechanische Bauteileigenschaften nicht sichergestellt werden können.

Aus den vorgenannten Gründen werden bislang Ausgangsmaterialien für die Extrusion oder den Spritzguss, die Karbonprimärfasern enthalten, aus Endlosfasersträngen hergestellt. Um diese gut verarbeitbar zu machen, werden die endlosen Fasern zu Bündeln zusammengefasst und vor dem Schneiden in Längen von 3 mm bis 12 mm mit einer stark klebenden Binderschicht, auch als Schlichte oder Sizing bezeichnet, zu einem dicken Endlosfaserbündel verklebt. Man kann auch Endlosfasern bündeln und anschließend mit einer Polymerschmelze umhüllen oder imprägnieren, verfestigend abkühlen und in die gewünschte Länge schneiden. Bei diesen Verfahren sind nur endlose PrimärCarbonfasern als Ausgangsmaterial einsetzbar. Endliche Fasern, die aus Abfallaufbereitungsprozessen oder dem stofflichen Recycling von Alt-CFK-Bauteilen resultieren, können aus den genannten Gründen als Fasern nicht unmittelbar den Ausgangsmaterialien für die Extrusion oder den Spritzguss zugefügt werden. Erst wenn es gelingt, diese in eine gut dosierbare und rieselfähige Form zu bringen, wird der Weg frei, die in zunehmenden Mengen anfallenden in ihren Eigenschaften immer noch hochwertigen Carbonfasem aus Abfällen oder Altteilen einer sinnvollen wirtschaftlichen Wiederverwertung zuzuführen.

Die Herstellung von primären Carbonfasem erfolgt nach dem Stand der Technik üblicherweise entweder aus geeigneten organischen Vorläuferfasern wie beispielsweise Polyacrylnitril (PAN) oder Viskosefasern durch kontrollierte Pyrolyse oder aus Pech, wobei in diesem Fall durch Schmelzspinnen zunächst eine Pechfaser hergestellt wird, die dann oxidiert und karbonisiert wird. Ein entsprechendes Verfahren ist beispielsweise aus der EP 1 696 057 A 1 bekannt. Dort werden die aus Pech hergestellten Primärfasem zu Stapelfasermatten verarbeitet, in denen die Fasern eine Ausrichtung in einer bevorzugten Richtung haben. Das bekannte Verfahren umfasst unter anderem einen Kämmprozess zur Parallelisierung der Fasern. Hier wird jedoch aus einem Carbonfaserflor letztlich ein Garn und somit ein linienförmiges Endprodukt hergestellt.

Grundsätzlich ist es aus dem Stand der Technik bekannt, ein bahnförmiges konsolidiertes Halbzeug aus einem Hybridband herzustellen, in dem Verstärkungsfasern endlicher Länge und thermoplastische Matrixfasern enthalten sind. In der DE 101 51 761 A 1 wird ein derartiges Verfahren beschrieben, bei dem zunächst ein Kardenband aus thermoplastischen Matrixfasern und Naturfasern hergestellt wird, welches dann einen Speicher, eine Führung und schließlich eine Legeeinheit durchläuft. Nach Erwärmung in einer Heizstrecke und Konsolidierung wird ein bahnförmiges Halbzeug erhalten. In dieser Schrift wird auch erwähnt, dass anstelle der Naturfasern auch Kohlefasern als Verstärkungsfasern verwendet werden können.

In der DE 10 2008 002 846 A1 ist ein Abfallaufbereitungsverfahren beschrieben, in dem faserverstärkte oder faserhaltige Halbzeuge recycelt werden. Dabei werden die in einem Matrixwerkstoff gebundenen Fasern von dem Matrixwerkstoff getrennt und die erhaltenen freien Fasern werden unmittelbar danach mit einem Bindemittel benetzt. Die Trennung der Fasern aus dem Halbzeug erfolgt jedoch in einem Ofen, also durch Pyrolyse. Endprodukt sind bei diesem Verfahren Faserbündel aus benetzten Fasern, zu deren weiterer Verarbeitung sich in der Druckschrift keine Angaben finden.

Aus der DE 197 39 486 A1 ist ein Verfahren zur Herstellung eines plattenförmigen Halbzeugs aus Faserverbundwerkstoff bekannt geworden, bei dem ein recycliertes thermoplastisches Material, nämlich Faserabfälle aus der Teppichherstellung mit einem Abfallmaterial aus der Himmelherstellung gemischt und mittels einer Krempelmaschine gekrempelt wird. Die thermoplastischen Fasern können aus Polypropylen, Polyethylen, Nylon oder PET bestehen. Diese Fasern werden vor der weiteren Verarbeitung in bis etwa 50 mm lange Streifen geschreddert. Das Abfallmaterial aus der Himmelherstellung wird durch Rollen, die nadelartige Erhebungen besitzen, auseinandergezupft und in Streifen geteilt. Beide Abfallfasermaterialien werden gemischt und mittels einer Krempelmaschine gekrempelt. Das Dokument enthält keine weiteren Ausführungen dazu, dass Maßnahmen für eine gezielte Ausrichtung (Orientierung) der Fasern getroffen werden. Weiterhin finden sich in dieser Druckschrift keine Anregung für die Verwendung von Carbonfasem aus Abfällen. Bei diesem bekannten Verfahren wird zunächst eine Matte hergestellt, die dann in ein Karosseriebauteil eines Fahrzeugs umgeformt wird.

In der DE 197 11 247 A1 ist ein Verfahren zur Herstellung von Langfasergranulat aus Hybridbändern beschrieben. Bei diesem Verfahren werden Hybridbänder aus Verstärkungsfasern und Matrixfasern aufgeheizt, durch eine Drehungserteilung kompaktiert und zu einem Strang ausgeformt. Hier wird ein linienförmiges Endlosprodukt durch Aufschmelzen der thermoplastischen Faserkomponente und Abkühlen hergestellt. Die dem Materialstrang erteilte Drehung wird beibehalten und dann wird dieser Strang durch einen Schnitt in Querrichtung mit Hilfe eines Granulators zu Pellets abgelängt.

In der DE 44 19 579 A1 ist ein Verfahren zur Herstellung von Pellets aus Faserverbundwerkstoff beschrieben, bei dem man ein Kunststoff-Granulat einem Extruder zuführt, dieses aufschmilzt und dann stromabwärts geschnittene Glasfasern einheitlicher Länge zuführt. Die Masse wird dann aus einer Schlitzdüse ausgetragen, segmentiert und zu Pellets zerteilt. Der Faseranteil in den erzeugten Pellets ist vergleichsweise gering. Es werden keine Carbonfasem verwendet und in dem bekannten Verfahren werden keine Recyclingfasern verarbeitet.

In dem Japanischen Patent Abstract 2005089515 A ist ein Verfahren zur Herstellung von Pellets aus Faserverbundwerkstoffen beschrieben, bei dem Carbonfasem und ein thermoplastisches Matrixmaterial umfassend ein Phenolharz und ein Styrolharz mit einem Gummianteil zu Pellets verarbeitet werden, in denen die Carbonfasem eine Orientierung in Längsrichtung der Pellets aufweisen. Der Anteil an den Carbonfasem beträgt 5 - 30 Gew. %. Dabei werden Carbonfasem verwendet, die nach einem herkömmlichen Verfahren primär für die Pellet-Fertigung hergestellt werden und somit einen vergleichsweise kostenträchtigen Ausgangsstoff darstellen. Zudem wird von Endlosfasern ausgegangen und demgemäß entspricht die Länge der Carbonfasem jeweils der Länge der Pellets.

Hier setzt die vorliegende Erfindung ein. Die Aufgabe der vorliegenden Erfindung besteht darin, ein Verfahren zur Herstellung von Pellets aus Faserverbundwerkstoffen der eingangs genannten Art zur Verfügung zu stellen, bei dem kostengünstiger erhältliche Carbonfasem als Verstärkungsfasern eingesetzt werden können.

Die Lösung dieser Aufgabe liefert ein Verfahren der eingangs genannten Gattung mit den kennzeichnenden Merkmalen des Hauptanspruchs.

Erfindungsgemäß ist vorgesehen, dass man aus carbonfaserhaltigen Abfällen oder Altteilen Carbonfasem isoliert, diese zusammen mit dem thermoplastischen Matrixmaterial flächig ablegt, unter Wärmeeinwirkung zu einem Plattenmaterial verpresst, danach abkühlt und zu Pellets, Plättchen oder Chips zerkleinert. Dokument DE 10038405C1 offenbart ein vergleichbaren Verfahren wobei Naturfasernmaterial statt Carbonfasern benutzt wird. Erfindungsgemäß wird aber zunächst mindestens eine Schicht aus endlichen Carbonfasern, Carbonfaserbündel oder deren Mischung durch deren flächiges Ablegen in einem pneumatischen Wirrvliesprozess, einem Krempelprozess, einem Nassvliesprozess, Papierherstellungsprozess oder als lose Schüttung.

Das erfindungsgemäße Verfahren ermöglicht es, endliche Carbonfasern, Carbonfaserbündel oder deren Mischung beispielsweise aus textilen Produktionsabfällen, verklebten oder ausgehärteten Produktionsabfällen, aus aufbereiteten Alt-CFK-Bauteilen oder dergleichen als Verstärkungsfasern einzusetzen, womit ein kostengünstigeres Ausgangmaterial zur Verfügung steht und die in den genannten Altstoffen enthaltenen Carbonfasem erneut einer sinnvollen Verwendung zugeführt werden. Die endlichen Carbonfasern, Carbonfaserbündel oder deren Mischung werden dabei in eine rieselfähige und gut dosierbare, kompakte Form gebracht und können beispielsweise als Ausgangsmaterialien für die Extrusion oder den Spritzguß eingesetzt werden.

Wenn es sich um Karbonabfälle oder Altteile handelt, die mit klebenden Harzen imprägniert sind, oder um CFK-Bauteile oder Bauteilreste, bei denen die Carbonfasem in einem Festkörperverbund eingebettet sind, werden die Carbonfasem zunächst von störenden Matrixsubstanzen befreit. Hierzu können beispielsweise Pyrolysetechniken eingesetzt werden oder die Abfälle werden mit überkritischen Lösungsmitteln behandelt. Als Produkt aus diesen Trennprozessen resultieren endliche Carbonfasern.

Gemäß einer Weiterbildung der Erfindung erzeugt man nicht wie im Stand der Technik zunächst ein linienförmiges Faserband, sondern man verarbeitet in eine Vliesbildungsanlage eingebrachte Carbonfasem unmittelbar zu einer dünnen und massegleichmäßigen Faserfläche und bildet so flächige und massegleichmäßige, carbonfaserhaltige Schichten variabel einstellbarer Dicken und Flächenmassen.

Die erfindungsgemäß eingesetzten Carbonfasern, Carbonfaserbündel oder deren Mischung weisen je nach verwendbarem Flächenbildungsverfahren eine mittlere Faserlänge von 3 mm bis 150 mm auf. Kurze Fasern bis etwa 10 mm können mit dem Nassvliesverfahren, längere Fasern im Bereich von 20 bis 150 mm können mit Wirrvliestechnik oder einer Krempel zu einem flächigen Gut verarbeitet werden.

Im Rahmen der vorliegenden Erfindung gibt es verschiedene bevorzugte Möglichkeiten, die Carbonfasern mit dem thermoplastischen Matrixmaterial zu vermischen. Beispielsweise kann man am Eingang einer Krempelanlage Carbonfasern und thermoplastische Fasern in Form meine Faserflockenmischung oder jeweils als gesonderte Schichten zuführen und diese in der Krempel homogen durchmischen.

Bei Einsatz des Nassvliesverfahrens können Karbonkurzfasern mit thermoplastischen Partikeln, beispielsweise Kurzfasem, in der Aufschwemmflüssigkeit der Nassvliesanlage vorher innig miteinander vermischt werden.

Man kann auch beispielsweise mindestens eine massegleichmäßige thermoplastische Schicht, bestehend aus mindestens einer thermoplastischen Folie, Faserflorschicht oder Vliesstoffschicht gegebenenfalls in Form einer Schmelze mit mindestens einer nach oben aufgeführtem Vliesbildungsverfahren gebildeten massegleichmäßigen, flächigen Schicht aus endlichen Carbonfasern, Carbonfaserbündel oder deren Mischung durch Schichtung in Kontakt bringen.

Alternativ kann man auch eine thermoplastische Komponente in Form eines Pulvers oder als Partikel mit einem Durchmesser kleiner als etwa 5 mm auf mindestens eine Schicht aus endlichen Carbonfasern, Carbonfaserbündel oder deren Mischung aufbringen oder in eine solche Schicht einbringen.

Man kann beispielsweise eine thermoplastische Komponente in Form endlicher Fasern mit den Carbonfasem vor oder während einer Schichtbildung innig und homogen miteinander vermischen.

Als Ergebnis oben aufgeführter Beispiele resultieren flächige Zwischenprodukte in denen endliche Carbonfasern, Carbonfaserbündel oder deren Mischung in einem definierten und konstanten Masseverhältnis mit mindestens einer thermoplastischen Komponenten lose miteinander verbunden vorliegen. Gegenstand der vorliegenden Erfindung ist, dass im Anschluss daran mindestens eine thermoplastische Komponenten durch einen Heißprozess erweicht bzw. schmilzt und die Carbonfasern vorzugsweise unter flächiger Pressung und Abkühlung zu einer biegesteifen Schicht bzw. Platte so konsolidiert werden, dass nach einem weiteren Zerkleinerungsprozess rieselfähige und gut für Spritzguss und Compoundierung dosierbare Pellets resultieren. Im Gegensatz beispielsweise zu DE 44 19 579 A1, wo mit Schmelzeimprägnierung und Extrusionstechnik gearbeitet wird, kann der einstellbare Fasergehalt in resultierenden Pallets mit bis zu 95 % wesentlich über die in DE 44 19 579 A1 genannte Grenze von 35 % eingestellt werden und so kostengünstige Carbonfaserkonzentrate in Palletform für die Compoundierung bereitgestellt werden.

Temperatur und Pressdruck während der thermischen Verfestigung in Kombination mit dem prozentualen Anteil und der Polymerart des schmelzenden bzw. klebend erweichenden Thermoplastmaterials entscheidet über den mechanischen Zusammenhalt aller Komponenten im Pellet und damit die Verwendbarkeit für den Spritzguss und die Compoundierung.

Gegenstand der vorliegenden Erfindung ist weiterhin ein carbonfaserhaltiges Pellet, welches nach einem Verfahren der vorgenannten Art hergestellt wurde und welches bevorzugt einen Anteil an Carbonfasern im Bereich von 5 % bis 95 %, vorzugsweise im Bereich von 10 % bis 80 % aufweist und bei dem bevorzugt die maximale Randentfemung des Pellets 3 bis 25 mm, vorzugsweise 5 bis 10 mm beträgt. Bevorzugt ist es dabei so, dass die im Pellet enthaltenen Carbonfasern, Carbonfaserbündel oder deren Mischung keine einheitliche Faserlänge aufweisen und Anteile davon nicht den gesamten Pelletkörper unterbrechungsfrei durchziehen.

Ein erfindungsgemäßes Pellet kann beispielsweise auch neben Carbonfasern, Carbonfaserbündel oder deren Mischung aus Carbonfaserhaltigen Abfällen oder Altteilen einen Anteil an Carbonfasern, Carbonfaserbündel oder deren Mischung in Form endlicher Primärware (Neuware) enthalten. Ebenso kann dieses Pellet beispielsweise auch neben Carbonfasem weitere verstärkend wirkende Faseranteile in endlicher Form, insbesondere Para-Aramid, Glasfasern, Naturfasern, nicht schmelzende Chemiefasern und/oder höher als die Matrixfasern schmelzende Fasern enthalten.

Als Techniken zur Herstellung erfindungsgemäßer insbesondere masse- oder volumengleichmäßiger carbonfaserhaltiger Flächengebilde können je nach der Art der einzusetzenden endlichen Carbonfasern, Carbonfaserbündel oder deren Mischung, vorrangig in Abhängigkeit zu vorliegender Faserlänge, Faserlängenverteilung, beispielsweise an sich bekannte Trockentechniken wie das Vlies-Krempeln, die pneumatische Vlieslegung, die Bildung einer losen Schüttung über Streueinrichtung bei Einsatz kurzer Fasern bis etwa 10 mm oder mittels Füllschacht bei mittleren Faserlängen >10 mm, sowie Nasstechniken wie die Nassvliesherstellung oder Papiertechnologie verwendet werden. Auch ein Pulverstreuen bei extremen kurzen Fasern bis etwa 5 mm ist als schichtbildender Prozessschritt möglich.
Carbonfaserausgangsmaterial für das Verfahren sind beispielsweise:
- zerkleinerte Primärfasem und/ oder zerkleinerte Rovingstränge,
- zerkleinerte und/oder zerfaserte Gelege-, Gewebe-, oder Geflechtreste,
- zerkleinerte und /oder zerfaserte Fadenabfälle oder Restspulenmaterial,
- zerkleinerte und/oder zerfaserte und/oder thermisch oder mit einem Lösungsmittel vorbehandelte Prepregabfälle oder
- aus harzhaltigen Abfälle, Hart-CFK-Teile und/ oder Altbauteile gewonnene, gegebenenfalls zusätzlich zerkleinerte und/ oder zerfaserte endliche Carbonfasem und/ oder endliche Carbonfaserbündel

Entsprechend den vorliegenden Carbonfaserlängen können diese direkt in den Prozess der Schichtbildung einfließen oder zur Verbesserung der Verarbeitbarkeit weiter zerkleinert und/oder beispielsweise mit einer Schlichte, haftvermittelnden Substanzen oder anderen im späteren Kunststoff wirksam werdenden zusätzlichen Mitteln wie Flammhemmem, Farbstoffen, Entformungshilfen oder Tribologiehilfsmittel ausgerüstet bzw. gemischt werden. Weiter ist es möglich, zu den Carbonfaserstoffen zusätzlich funktionell wirkende Fremdfaserstoffe beispielsweise zur Schlagzähmodifizierung oder mechanischen Verstärkung wie para-Aramid, Glasfasern, Naturfasern oder nichtschmelzende Chemiefasern bzw. höher als die Matrixfaser schmelzende Fasern zuzumischen. Faserförmige Zumischanteile wie die später bindend wirkenden thermoplastischen Faserstoffe können in einem eigenständigen Prozessschritt vor der Schichtbildung, z.B. über eine textile Fasermischstraße, oder unmittelbar während der Schichtbildung, z.B. in einer Krempel, mit den übrigen Faseranteilen innig und möglichst homogen vermischt werden. Nutzt man die Möglichkeiten einer Systemmischung, werden die einzelnen Faserkomponenten sortenrein beispielsweise in unterschiedlichen Schichten als Faserflore oder Vliesstoffbahnen übereinander abgelegt. Wichtig ist hier, dass die thermoplastische Bindekomponente nach der thermischen Verfestigung alle Schichten ausreichend durchdringt, um so eine kompakte Verbindung aller Schichten untereinander sicherzustellen. Erreicht werden kann dies durch eine homogene Mischung aller Komponenten untereinander, mit beispielsweise einem alternierenden Aufbau dünner Schichten mit Thermoplast und Verstärkungskomponente oder beispielsweise durch ein intensives Durchstechen von thermoplastischen Bindefasem durch die Carbonfaserschicht mit einem Vemadelungsvorgang. Bei dünnen Schichten oder einer guten Durchtränkbarkeit mit thermoplastischer Schmelze genügt ein Sandwich, in dem die nichtschmelzenden Komponenten als Kernlage angeordnet ist.

Als thermoplastisch bindende Komponenten kommen in der Regel die unterschiedlichsten aus dem Stand der Technik bekannten thermoplastischen Kunststoffmatrices in Betracht. Dies reicht vom niedrig schmelzenden Polyethylen über Polypropylen, Polyamide, bis hin zu den hoch schmelzenden Thermoplasten PEEK oder PEI. Die thermischen Verfestigungsparameter wie Temperatur, Verweilzeit, Druck und eventuell Einsatz von Inertgasatmosphäre müssen an die Besonderheiten dieser Polymere angepasst werden. Die einsetzbaren Formen der thermoplastischen Bindekomponenten reichen von kleinen Partikeln wie Pulvern über Kurzfasem, textile Langfasem, Vliesstoff- oder Faserstoffschichten, Spinnvliesstoffen, Folien bis hin zu Polymerschmelzen.

Nach der Kombination der endlichen Carbonfasem mit dem thermoplastischen Binder in einer flächigen Schichtanordnung mit einem möglichst konstanten Masseverhältnis von Carbonfaser zu Thermoplast wird diese Schichtung aufgeheizt, so dass die Thermoplastkomponente erweicht oder schmilzt. Bei Einsatz einer Polymerschmelze wäre dieser Schritt allerdings nicht erforderlich. Hier kann der Auftrag beispielsweise über Breitdüsen auf die Carbonfaserschicht erfolgen - anschließend über Druck kompaktiert und unter Druck oder ohne zusätzlichen äußeren mechanischen Pressdruck abkühlend verfestigt werden.

Der Anteil der Thermoplastkomponente bestimmt die erreichbare Kompaktheit der Plattenware und die mechanische Stabilität der späteren Pellets. Die Untergrenze des Thermoplastanteils liegt vorzugsweise bei etwa 5%, wobei für einen nachweisbaren Verfestigungseffekt Carbonfasern und Thermoplastkomponente möglichst homogen innig miteinander vermischt werden sollten. Bei Sandwichverfahren sind Mindestbindeanteile von etwa 15 bis 25% vorteilhaft, um einen guten Zusammenhalt im späteren Pellet zu erzielen. Sollen die resultierenden Pellets in der Compoundierung verwendet werden, arbeitet man im Sinne einer hohen Wirtschaftlichkeit bevorzugt mit einem hohen Carbonfaser- und möglichst geringen Bindepolymeranteil. Sollen die Pellets direkt zu Bauteilen verspritzt werden, verwendet man die thermoplastischen Polymere bevorzugt in Anteilen >50%, in der Regel mit 70 bis 90%.

Über den Anteil der Thermoplastkomponente kann beispielsweise die Härte der Pellets in einem weiten Bereich variiert werden. Dies reicht von einem kompakten porenfreien Zustand über zunehmende Porigkeiten bis hin zu einem thermisch verfestigten Faservlieszustand geringer Dichte. Zusätzlich zu den verwendeten Carbonfaserstoffen können weitere Faserstoffe in endlicher Form verwendet werden. Diese können analog der Carbonfaserkomponenten durch Fasermischprozesse vor oder während der Schichtbildung oder als separate Systemkomponenten bei der Materialschichtung zugeführt werden.

Die thermisch verfestigte Plattenware wird anschließend definiert zerkleinert. Dies kann beispielsweise mittels eines Stanzprozesses, mittels Kammmesserschneidtechnik oder in Kombination von 2 Fallmesserschneidmaschinen erfolgen. Die Partikelgröße richtet sich nach den Gegebenheiten des Compoundeurs oder Spritzgießers, wird vorzugsweise in der Regel in ihrer größten Dimension 15 mm nicht überschreiten. Gut verarbeitbare Pellets weisen beispielsweise maximale Kantenlängen von 5 bis 10 mm auf. Die Pellets müssen keine regelmäßige oder gleichmäßige Form aufweisen. Ebenfalls von untergeordneter Bedeutung ist die Dicke der Pellets. Im Sinne eines guten Zusammenhaltes müssen sehr dicke, massereiche Pellets einen höheren Mindestthermoplastanteil aufweisen als dünne plättchenförmige Pellets, die aufgrund ihrer geringeren Masse beim Dosieren und Zumischen kleinere Trägheitskräfte beim gegenseitigen Kontakt zerstörungsfrei überstehen.

Die Einsatzbereiche derartiger Karbonpellets sind vorzugsweise die Compoundierung und der Spritzguss zur Herstellung thermoplastisch gebundener Faserverbundwerkstoffe. Weitere Anwendungsfelder mit insbesondere niedrig schmelzenden Bindeanteilen sind beispielsweise die Elastomer- oder Gummiverstärkung oder der Einsatz als gering verfestigte Pellets in Duromermatrices, die beispielsweise durch Rührprozesse im Duromer wieder zerfasem, die Carbonfasem freigeben, so dass diese dann gut in der Duromermatrix verteilt werden können.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird anhand von konkreten Ausführungsbeispielen die vorliegende Erfindung näher erläutert. Es versteht sich, dass diese Ausführungsbeispiele nur exemplarischen Charakter haben und die Erfindung in keiner Weise auf die darin genannten konkreten Maßnahmen und Parameter beschränkt ist.

### Ausführungsbeispiel 1

### Verarbeitung einer Faser/Faser-Mischung zu Pellets für den Spritzguss

Für die Herstellung von carbonfaserhaltigen Pellets für den Spritzguss wurden aus 100% Karbongewebeabfällen gewonnene Karbonrecyclingfasern mit einer mittleren Faserlänge von 40 mm und eine handelsübliche, textile PA6-Stapelfaser 3,3 dtex, 60 mm als Ausgangsmaterial eingesetzt. Beide Materialien wurden in einem Masseverhältnis von 70% PA6 und 30% Recyclingcarbonfasern (RCF) über ein textilindustrieübliches Mischbett und anschließende Mischöffnertechnik als sogenannte Flockenmischung intim miteinander vermischt. Diese Fasermischung wurde anschließend einer Krempelanlage vorgelegt und das produzierte flächige, flächenmassegleichmäßige Krempelflor mit einer Flächenmasse von 35 g/m² mit einer Fasermischung von 70/30 PA6/RCF über einen Quertäfler zu einer Mehrfachflorschichtung mit einer Flächenmasse von 260 g/m² doubliert und anschließend mit einer Nadelmaschine mit 25 Stichen/cm² so weit verfestigt, dass das Vlies für die Folgeprozesse einerseits sicher handhabbar war, andererseits die Stichintensität zum Erhalt möglichst langer Carbonfasern im Vlies nicht zu hoch waren. 10 solcher Nadelvliese einer Flächenmasse von etwa 250-260 g/m² wurden in Form von Stücken zu 30 cm x 30 cm übereinandergelegt und mit einer Etagenpresse bei 240°C mit 50 bar 100s verpresst und anschließend abgekühlt. Von den resultierenden Platten wurden die noch unverfestigten weichen Kanten mit einer Schlagschere abgetrennt. Anschließend wurden die Platten auf einer Fallmesserschneidmaschine der Fa. Pierret mit einem Schnitt von 6,3 mm zuerst längs in Streifen und durch erneutes Vorlegen der Streifen in einem Querschnitt zu chipartigen Pellets mit Kantenlängen je nach erzielter Schnittgenauigkeit in einem Bereich von 4 bis 10 mm zerkleinert. Die Pellet sind unregelmäßig ausgebildet; im Idealfall quadratisch meist jedoch unregelmäßig als Sehnenviereck oder Tangentenviereck bis hin zu unregelmäßige Dreiecken ausgebildet. Diese Formen resultieren aus der angewandten Zerkleinerungstechnik der Plattenware und sind für den Einsatz im Spritzguss nicht von vorrangiger Bedeutung. Vielmehr wichtig ist, dass in den Pellets keine übergroßen Anteile vorhanden sind, die zum Blockieren der Einzugstrichter an den nachfolgenden Anlagen führen. Diese so hergestellten Pellets konnten anschließend auf einer Spritzgießmaschine direkt zu FVW verarbeitet werden.

### Ausführungsbeispiel 2

### Verarbeitung einer flächigen Systemmischung zu Pellets für die Compoundierung

Aus einer Krempelanlage wurden unter Nutzung eines Quertäflers und einer anschließenden Vernadelungsmaschine 2 Vliesstoffbahnen mit einer Flächenmasse von 180 g/m² aus 100% einer handelsüblichen textilen PA6-Faser 3,3 dtex, 60 mm hergestellt. Die beiden Vliesbahnen wurde nur leicht mit 12 Stichen/cm² einmal von oben vernadelt. In einem folgenden Arbeitsschritt wurden 100% aus Gewebeabfällen gewonnene RecyclingCarbonfasern mit einer mittleren Faserlängen von 40 mm mittels speziell für die Verarbeitung von Carbonfasem technisch modifizierter Krempeltechnik zu einem flächigen Krempelflor flächenmassegleichmäßig mit 30 g/m² Krempelflor verarbeitet und dieses kontinuierlich aus der Krempel abgezogene Flor mit einem Quertäfler auf ein im Winkel von 90° dazu kontinierlich laufenden Ablageband quer und überlappend so abgelegt, dass eine Flächenmasse von 780 g/m² abgelegt wurde. Zwischen Ablageband und der aufzutäfelnden Carbonfaserflorschichtung wurde eine der vorher gefertigten Nadelvliesbahnen gelegt, so dass die Carbonfaserschichtung auf dem PA6-Nadelvlies angeordnet war.
Vor dem Einlauf in die nachfolgende Nadelmaschine wurde das zweite PA6-Nadelvlies mit 180 g/m² als Abdeckschicht aufgerollt, so dass damit ein Sandwich von 180g/m² PA6-Nadelvlies - 780 g/m² RCF-Florschichtung -180 g/m² PA6-Nadelvlies aufgebaut wurde. Dieses Sandwich wurde mit jeweils 25 Stichen/cm² von oben und unten verfestigend vemadelt. Durch den Nadelvorgang wurden Anteile der PA6-Vliesdeckschichten durch die RCF-Schicht durchgenadelt, so dass es quasi zu einer gewissen Durchmischung von PA6 mit der RCF-Schicht kam, was sich für die Stabilität des späteren erreichbaren thermischen Verfestigungsgrades positiv auswirkte. Die so hergestellten Nadelvliese mit PA6-Außenschicht und RCF im Kernbereich wurden als Stücke von 30 cm x 30 cm übereinandergelegt und mit einer Etagenpresse bei 240°C mit 50 bar 100s verpresst und anschließend abgekühlt. Von den resultierenden Platten wurden die noch unverfestigten weichen Kanten mit einer Schlagschere abgetrennt. Anschließend wurden die Platten auf einer Fallmesserschneidmaschine der Fa. Pierret mit einem Schnitt von 9,8 mm zuerst längs in Streifen und durch erneutes Vorlegen der Streifen in einem Querschnitt zu chipartigen Pellets mit Kantenlängen je nach erzielter Schnittgenauigkeit in einem Bereich von 7 bis 14 mm zerkleinert. Die Pellets sind unregelmäßig ausgebildet, im Idealfall quadratisch meist jedoch unregelmäßig als Sehnenviereck oder Tangentenviereck bis hin zu unregelmäßigen Dreiecken. Diese Formen resultieren aus der angewandten Zerkleinerungstechnik der Plattenware und sind für den Einsatz bei der Compoundierung nicht von vorrangiger Bedeutung. Vielmehr wichtig ist, dass in den Pellets keine übergroßen Anteile vorhanden sind, die zum Blockieren der Einzugstrichter an den nachfolgenden Anlagen führen. Diese so hergestellten Pellets konnten anschließend auf einem Extruder zu carbonfaserhaltigem Spritzgussgranulat mit einem Fasemanteil von 10% RCF verarbeitet werden.

Nachfolgend wird das Arbeitsprinzip einer im Rahmen der vorliegenden Erfindung verwendbaren Krempel beispielhaft unter Bezugnahme auf die beiliegende Zeichnung näher beschrieben.

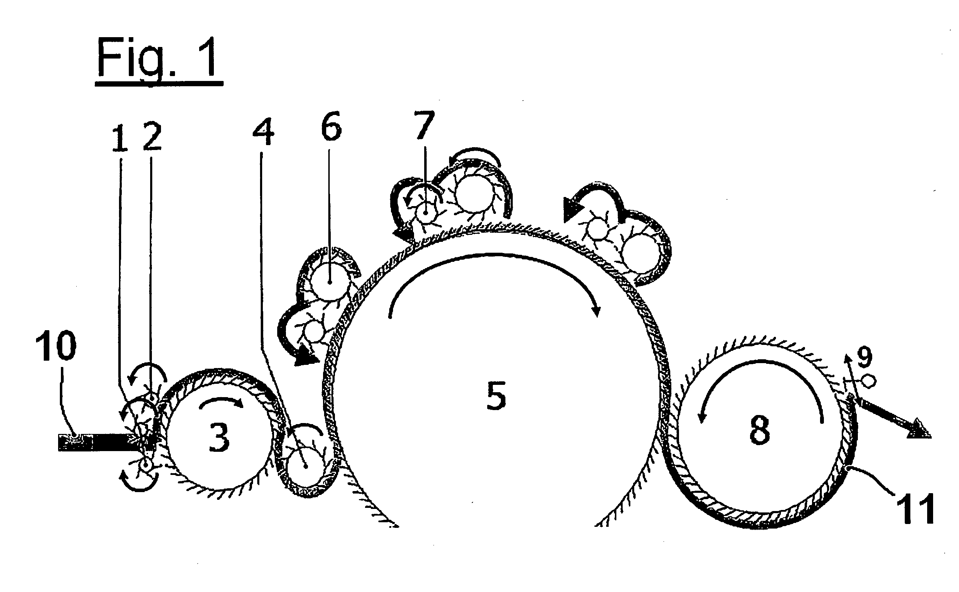

Dabei zeigt die Figur 1 eine schematisch vereinfachte Darstellung des Prinzips einer Krempelanlage, welche beispielsweise geeignet ist zur Herstellung eines Faserflors umfassend unter anderem Carbonfasem nach dem erfindungsgemäßen Verfahren.

Die Darstellung zeigt mindestens eine (in der Zeichnung links) in die Krempelanlage einlaufende Faserschicht 10, die zunächst über Einlaufwalzen 1, 2 auf einen sich gegenüber den Einlaufwalzen im umgekehrten Drehsinn rotierenden Vorreißer 3 gelangt. Zwischen diesem Vorreißer 3 und der sich im gleichen Drehsinn wie dieser Vorreißer drehenden Haupttrommel (Tambour) 5 ist eine Übergabewalze 4 angeordnet, die sich entgegengesetzt zu Vorreißer 3 und Haupttrommel 5 dreht. Am Umfang der Haupttrommel 5 sind in verschiedenen Umfangspositionen diverse Arbeiter 6 und Wender 7 angeordnet. Die Aufgabe dieser Einrichtungen besteht darin, die einlaufende Faserschicht 10 in der Krempelanlage bis zur Einzelfaser zu zerfasern und wieder zu einem dünnen und massegleichmäßigen Faserflor mit einer definierten Flächenmasse zu formieren. Dabei wird vorzugsweise eine Faserlängsorientierung angestrebt.

Hinter der Haupttrommel 5 ist eine zu dieser im entgegengesetzten Drehsinn rotierende Abnehmertrommel 8 angeordnet, an der sich an der stromabwärts gelegenen Seite ein Hacker 9 befindet. Von dieser Abnehmertrommel 8 wird ein Faserflor 11 in Form einer Endlosfläche ausgetragen, welcher beispielsweise eine Flächenmasse bis maximal etwa 80 g/m² aufweist, vorzugsweise maximal etwa 60 g/m², sowie eine Faserlängsorientierung von beispielsweise etwa 15 - 30 g/m²

### Bezugszeichenliste

- 1: Einlaufwalzen
- 2: Einlaufwalzen
- 3: Vorreißer
- 4: Übergabewalze
- 5: Haupttrommel (Tambour)
- 6: Arbeiter
- 7: Wender
- 8: Abnehmertrommel
- 9: Hacker
- 10: einlaufende Faserschicht
- 11: Faserflor

## Patentansprüche

1. Verfahren zur Herstellung von Pellets aus Faserverbundwerkstoffen geeignet für die weitere Verarbeitung in einem kunststofftechnischen Fertigungsverfahren, wobei die Pellets Carbonfasern und wenigstens ein thermoplastisches Matrixmaterial enthalten, wobei man aus carbonfaserhaltigen Abfällen oder Altteilen isolierte Carbonfasern. Carbonfaserbundel oder eine Mischung daraus verwendet, diese zusammen mit dem thermoplastischen Matrixmaterial flächig ablegt, unter Wärmeeinwirkung zu einem Plattenmaterial verpresst, danach abkühlt und zu Pellets. Plättchen oder Chips zerkleinert, **dadurch gekennzeichnet, dass** man zunächst mindestens eine Schicht aus endlichen Carbonfasern erzeugt durch flächiges Ablegen von endlichen Carbonfasern in einem pneumatischen Wirrvliesprozess, einem Krempelpfozess, einem Nassvliesprozess, Papierherstellungsprozess oder als lose Schüttung.

2. Verfahren nach Anspruch 1, **dadurch gekennzeichnet, dass** die eingesetzten Carbonfasern, Carbonfaserbündel oder deren Mischung eine mittlere Länge von 3 mm bis 150 mm aufweisen.

3. Verfahren nach Anspruch 1 oder 2, **dadurch gekennzeichnet, dass** man eine in eine Krempelanlage einlaufende Faserschicht unmittelbar zu einem dünnen und massegleichmassigen Faserflor verarbeitet.

4. Verfahren nach Anspruch 3, **dadurch gekennzeichnet, dass** man am Eingang der Krempelanlage endliche Carbonfasern, Carbonfaserbündel oder deren Mischung und thermoplastische Fasern jeweils als gesonderte Schicht zuführt und diese in der Krempel mischt.

5. Verfahren nach einem der Ansprüche 1 oder 2, **dadurch gekennzeichnet, dass** man mindestens eine thermoplastische Schicht umfassend mindestens eine thermoplastische Folie, Faserflorschicht oder Vliesstoffschicht gegebenenfalls in Form einer Schmelze mit mindestens einer Schicht aus endlichen Carbonfasern, Carbonfaserbündel oder deren Mischung in Kontakt bringt.

6. Verfahren nach einem der Ansprüche 1 oder 2, **dadurch gekennzeichnet, dass** man eine thermoplastische Komponente in Form eines Pulvers oder als Partikel mit einem Durchmesser kleiner als etwa 5 mm auf mindestens eine Schicht aus endlichen Carbonfasern, Carbonfaserbündel oder deren Mischung aufbringt oder in eine solche Schicht einbringt und die Anordnung erwärmt oder man die genannte thermoplastische Komponente in Form einer Schmelze mit mindestens einer Schicht aus endlichen Carbonfasem in Kontakt bringt.

7. Verfahren nach einem der Ansprüche 1 bis 4, **dadurch gekennzeichnet, dass** man eine thermoplastische Komponente in Form endlicher Fasern mit den Carbonfasern, Carbonfaserbündel oder deren Mischung vor oder während einer Schichtbildung innig und homogen miteinander vermischt.

8. Verfahren nach einem der Ansprüche 1 bis 4, **dadurch gekennzeichnet, dass** man einzelne Komponenten, nämlich Carbonfasern, Carbonfaserbündel oder deren Mischung, thermoplastische Matrixfasern und gegebenenfalls weitere Fasern anderer Zusammensetzung jeweils sortenrein in unterschiedlichen Schichten als Faserflore oder Vliesstoffbahnen übereinander flächig ablegt und Massnahmen trifft, um eine ausreichende Durchdringung aller Schichten durch die thermoplastische Matrixkomponente und eine kompakte Verbindung der Schichten untereinander nach der thermischen Verfestigung zu erzielen.

9. Verfahren nach einem der Ansprüche 1 bis 8, **dadurch gekennzeichnet, dass** zur Isolierung der Carbonfasern, Carbonfaserbündel oder deren Mischung aus Abfällen oder Altteilen störende Matrixsubstanzen mit Hilfe von Pyrolysetechniken oder durch Behandlung mit überkritischen Lösungsmitteln entfernt werden.

10. Carbonfaserhaltiges Pellet, hergestellt nach einem der Ansprüche 1 bis9, **dadurch gekennzeichnet, dass** dieses einen Anteil an Carbonfasern, Carbonfaserbündel oder deren Mischung im Bereich von 5 % bis 95 %, vorzugsweise im Bereich von 10 % bis 80 % aufweist und die maximale Randentfernung des Pellets 3 bis 25 mm, vorzugsweise 5 bis 10 mm beträgt.

11. Carbonfaserhaltiges Pellet nach Anspruch 10, **dadurch gekennzeichnet, dass** die im Pellet enthaltenen Carbonfasern, Carbonfaserbündel oder deren Mischung keine einheitliche Faserlänge aufweisen und Anteile davon nicht den gesamten Pelletkörper unterbrechungsfrei durchziehen.

12. Carbonfaserhaltiges Pellet nach einem der Ansprüche 10 oder 11, **dadurch gekennzeichnet, dass** dieses neben Carbonfasern, Carbonfaserbündel oder deren Mischung aus carbonfaserhaltigen Abfällen oder Altteilen auch einen Anteil an Carbonfasern in Form endlicher Primärware (Neuware) enthält.

13. Carbonfaserhaltiges Pellet nach einem der Ansprüche 10 bis 12, **dadurch gekennzeichnet, dass** dieses neben Carbonfasern, Carbonfaserbündel oder deren Mischung weitere verstärkend wirkende Faseranteile in endlicher Form, insbesondere Para-Aramid, Glasfasern Naturfasern, nicht schmelzende Chemiefasern und/oder höher als die Matrixfasern schmelzende Fasern enthält.

## Claims

1. A method for the manufacture of pellets from fibre composite materials suitable for further processing in a plastics production method, wherein the pellets contain carbon fibres and at least one thermoplastic matrix material, wherein isolated carbon fibres, carbon fibre bundles or a mixture thereof are utilised from carbon fibre containing waste or scrap parts, are laid down flat together with the thermoplastic matrix material, are pressed under the action of heat to form a sheet material, and are subsequently cooled down and comminuted to pellets, platelets or chips, **characterised in that** at least one layer of finite length carbon fibres is firstly generated by laying down flat of finite length carbon fibres in a pneumatic tangled fleece process, a carding process, a wet-laid fleece process, a paper manufacturing process, or as a loose fill.

2. The method in accordance with Claim 1, **characterised in that** the deployed carbon fibres, carbon fibre bundles or a mixture thereof have an average length of between 3 mm and 150 mm.

3. The method in accordance with Claim 1 or 2, **characterised in that** a fibre layer directly entering into a carding facility is processed so as to form a thin fibrous web of even mass distribution.

4. The method in accordance with Claim 3, **characterised in that** finite length carbon fibres, carbon fibre bundles or a mixture thereof and thermoplastic fibres are supplied to the entrance of the carding facility in each case as separate layers, and these are mixed in the carding process.

5. The method in accordance with one of the Claims 1 or 2, **characterised in that** at least one thermoplastic layer comprising at least one thermoplastic film, fibrous web, or non-woven fabric layer. If required in the form of a melt, is brought into contact with at least one layer of finite length carbon fibres, carbon fibre bundles or a mixture thereof.

6. The method in accordance with one of the Claims 1 or 2, **characterised in that** a thermoplastic component in the form of a powder or particles with a diameter smaller than approx. 5 mm is applied on at least one layer of finite length carbon fibres, carbon fibre bundles, or a mixture thereof, or is introduced into such a layer, and the arrangement is heated, or the cited thermoplastic component in the form of a melt is brought into contact with at least one layer of finite length carbon fibres.

7. The method in accordance with one of the Claims 1 to 4, **characterised in that** finite length fibres with the carbon fibres, carbon fibre bundles, or a mixture thereof in the form of a thermoplastic component are mixed intimately and homogeneously with one another before or during the formation of a layer.

8. The method in accordance with one of the Claims 1 to 4, **characterised in that** individual components, namely carbon fibres, carbon fibre bundles or a mixture thereof, thermoplastic matrix fibres and if required other fibres of another composition in each case of single origin are laid down flat one upon another in various layers as fibrous webs or non-woven fabric webs, and measures are taken to achieve a sufficient penetration of all layers by the thermoplastic matrix component and a compact connection of the layers one with another after the thermal solidification.

9. The method in accordance with one of the Claims 1 to 8, **characterised in that** for purposes of insulating the carbon fibres, carbon fibre bundles or a mixture thereof from waste or scrap parts perturbing matrix substances are removed with the aid of pyrolysis techniques or by treatment with supercritical solvents.

10. A pellet containing carbon fibres, manufactured in accordance with one of the Claims 1 to 9, **characterised in that** this has a proportion of carbon fibres, carbon fibre bundles or a mixture thereof in the range from 5 % to 95 %, preferably in the range from 10 % to 80 %, and the maximum distance of the pellet edges amounts to 3 to 25 mm, preferably 5 to 10 mm.

11. The pellet containing carbon fibres in accordance with Claim 10, **characterised in that** the carbon fibres, carbon fibre bundles or a mixture thereof contained in the pellet do not have a uniform length, and portions of these do not traverse across the whole body of the pellet without interruption.

12. The pellet containing carbon fibres in accordance with one of the Claims 10 or 11, **characterised in that** in addition to carbon fibres, carbon fibre bundles or a mixture thereof from waste or scrap parts containing carbon fibres, the pellet also contains a proportion of carbon fibres in the form of finite length virgin product (new product).

13. The pellet containing carbon fibres in accordance with one of the Claims 10 to 12, **characterised in that** in addition to carbon fibres, carbon fibre bundles or a mixture thereof, the pellet contains other fibre elements in finite length form acting in a reinforcing manner, in particular para-aramides, glass fibres, natural fibres, non-melting chemical fibres and/or fibres with a melting temperature higher than that of the matrix fibres.

## Revendications

1. Procédé de fabrication de pellets en matériaux composites fibreux, aptes à une transformation dans un procédé de fabrication de plastique technique, les pellets contenant des fibres de carbone et au moins un matériau matriciel thermoplastique, dans lequel on utilise des fibres de carbone, faisceaux de fibres de carbone isolées de déchets ou pièces usagées contenant des fibres de carbone ou leurs mélanges, on les dépose à plat avec le matériau matriciel thermoplastique, on les comprime sous effet thermique en une plaque de matériau, puis on les refroidit et on les débite en pellets, plaquettes ou copeaux, **caractérisé en ce qu'**au fabrique d'abord au moins une couche de fibres de carbone définitives par dépôt à plat de fibres de carbone définitives dans un procédé pneumatique de structuration embrouillée, un procédé de cardage, un procédé de structuration humide, un procédé de fabrication de papier ou sous forme de dépôt en vrac.

2. Procédé selon la revendication 1, **caractérisé en ce que** les fibres de carbone, faisceaux de fibres de carbone ou leurs mélanges utilisés ont une longueur moyenne de 3 mm à 150 mm.

3. Procédé selon la revendication 1 ou 2, **caractérisé en ce qu'**on transforme une couche fibreuse arrivant dans une installation de cardage directement en un voile de carde mince et de poids homogène.

4. Procédé selon la revendication 3, **caractérisé en ce qu'**on achemine les fibres de carbone, faisceaux de fibres de carbone définitifs ou leurs mélanges et les fibres thermoplastiques à l'entrée de l'installation de cardage respectivement sous forme de couche séparée et qu'on les mélange à la carde.

5. Procédé selon une des revendications 1 ou 2, **caractérisé en ce qu'**on met en contact au moins une couche thermoplastique contenant au moins un film thermoplastique, une couche de voile de carde ou une couche de non-tissé le cas échéant sous forme d'une coulée avec au moins une couche de fibres de carbone, faisceaux de fibres de carbone définitifs ou leurs mélanges.

6. Procédé selon une des revendications 1 ou 2, **caractérisé en ce qu'**on applique un composant thermoplastique sous forme d'une poudre ou sous forme de particules ayant un diamètre inférieur à environ 5 mm sur au moins une couche de couche de fibres de carbone, faisceaux de fibres de carbone définitifs ou leurs mélanges ou qu'on l'intègre dans une telle couche et qu'on chauffe l'ensemble ou qu'on met le composant thermoplastique indiqué sous forme d'une coulée en contact avec au moins une couche de fibres de carbone définitive.

7. Procédé selon une des revendications 1 à 4, **caractérisé en ce qu'**on mélange intimement et de manière homogène un composant thermoplastique sous forme de fibres définitives avec les fibres de carbone, faisceaux de fibres de carbone définitifs ou leurs mélanges avant ou pendant une formation de couche.

8. Procédé selon une des revendications 1 à 4, **caractérisé en ce qu'**on dépose les uns sur les autres des composants individuels, à savoir des fibres de carbone, faisceaux de fibres de carbone ou leurs mélanges, des fibres matricielles thermoplastiques et le cas échéant d'autres fibres d'une autre composition respectivement séparément en différentes couches sous forme de voile de carde ou de bandes de non-tissé et qu'on prend des mesures pour que toutes les couches soient suffisamment traversées par le composant thermoplastique et pour obtenir une liaison compacte des couches entre elles après la solidification thermique.

9. Procédé selon une des revendications 1 à 8, **caractérisé en ce que**, pour isoler les fibres de carbone, faisceaux de fibres de carbone ou leurs mélanges issus de déchets ou de pièces usagées, les substances matricielles indésirables sont éliminées à l'aide de technologies de pyrolyse ou par traitement avec des solvants hypercritiques.

10. Pellet contenant des fibres de carbone, fabriqué selon une des revendications 1 à 9, **caractérisé en ce que** celui-ci contient une part de fibres de carbone, faisceaux de fibres de carbone ou leurs mélanges de l'ordre de 5 % à 95 %, de préférence de l'ordre de 10 % 80 % et que l'écartement maximal des bords du pellet est au maximum de 3 à 25 mm, de préférence 5 à 10 mm.

11. Pellet contenant des fibres de carbone selon la revendication 10, **caractérisé en ce que** les fibres de carbone, faisceaux de fibres de carbone ou leurs mélanges contenus dans le pellet ne présentent pas une longueur uniforme de fibres et que des parties de celles-ci ne traversent pas l'ensemble du corps du pellet sans interruption.

12. Pellet contenant des fibres de carbone selon une des revendications 10 ou 11, **caractérisé en ce que** celui-ci contient, outre des fibres de carbone, faisceaux de fibres de carbone ou leurs mélanges issus de déchets ou pièces usagées contenant des fibres de carbone, également une partie de fibres de carbone sous forme de produit primaire (nouveau produit) définitif.

13. Pellet contenant des fibres de carbone selon une des revendications 10 à 12, **caractérisé en ce que** celui-ci contient, outre des fibres de carbone, faisceaux de fibres de carbone ou leurs mélanges, également d'autres quotas de fibres ayant un effet consolidateur sous forme définitive, en particulier du para-aramide, des fibres de verre, des fibres naturelles, des fibres chimiques ne fondant pas et/ou des fibres fondant plus que les fibres matricielles.
